## Europäisches Patentamt

## European Patent Office

## Office européen des brevets

(19)

(11) Publication number: **0 096 497**
**B1**

# EUROPEAN PATENT SPECIFICATION

(12)

(45) Date of publication of patent specification: **06.05.87**

(51) Int. Cl.⁴: **C 13 K 1/02**

(21) Application number: **83302943.2**

(22) Date of filing: **23.05.83**

(54) Solubilisation and hydrolysis of cellulose-containing materials.

(30) Priority: **01.06.82 GB 8215859**
**07.01.83 GB 8300393**

(43) Date of publication of application:
**21.12.83 Bulletin 83/51**

(45) Publication of the grant of the patent:
**06.05.87 Bulletin 87/19**

(84) Designated Contracting States:
**BE CH DE FR GB IT LI NL SE**

(56) References cited:
**US-A-4 018 620**

**The file contains technical information
submitted after the application was filed and
not included in this specification**

(73) Proprietor: **IMPERIAL CHEMICAL INDUSTRIES
PLC**
**Imperial Chemical House Millbank**
**London SW1P 3JF (GB)**

(72) Inventor: **Barker, Sidney Alan**
**1 Abdon Avenue**
**Selly Oak Birmingham B29 4NT (GB)**
Inventor: **Somers, Peter John**
**171 Bournville Lane**
**Bournville Birmingham B30 1LY (GB)**
Inventor: **Beardsmore, Andrew John**
**13 Weardale**
**Pine Hills Guisborough Cleveland (GB)**
Inventor: **Rodgers, Brian Lewis Frederick**
**2 Avon Grove Wolviston Court Estate**
**Billingham Cleveland (GB)**

(74) Representative: **Aufflick, James Neil et al**
**Imperial Chemical Industries PLC Legal
Department: Patents PO Box 6 Bessemer Road
Welwyn Garden City Herts, AL7 1HD (GB)**

Courier Press, Leamington Spa, England.

# 0 096 497

## Description

This invention relates to a process for the solubilisation and hydrolysis of cellulose-containing materials.

Cellulose-containing materials are derived originally from plants and generally contain, in addition to cellulose, hemi-cellulose and lignin. Cellulose is a polymer, the chain units of which are essentially all derived from glucose. Hemi-cellulose is a polymer the chain units of which are derived from various sugars, mainly glucose and xylose but with other sugar units occurring depending upon the source of the cellulose. Cellulose occurs in both crystalline and amorphous forms, the crystalline form being more common. Hydrolysis of crystalline cellulose is rendered difficult because its ordered structure impedes the approach of enzymes or other reagents to the glycosidic links in the cellulose chains thereby making it difficult for these reagents to break down the glycosidic links.

In recent years a considerable amount of research has been carried out to find satisfactory processes for the solubilisation and hydrolysis of glycosidically linked carbohydrates such as cellulose or starch to produce simpler materials including higher saccharides, tri-, di- saccharides and particularly mono-saccharides such as glucose. In our published European Patent Application No. 44622 we propose processes for treating glycosidically linked carbohydrates with mixtures comprising inorganic acids and various metal halides including calcium chloride. Additionally US—A—4018620 discloses a process for hydrolysing cellulose to monosaccharides in high yields by refluxing a slightly acid mixture of the cellulose and calcium chloride. At first sight the use of calcium chloride as the metal halide in such a process offers a number of advantages including for example low materials cost and ease of recovery. However use of calcium chloride in processes such as those mentioned above also presents a disadvantage in that solubilisation and hydrolysis can be incomplete. For example, when a solution containing a saturation concentration of calcium chloride and less than 3—4% hydrogen chloride by weight is used, incomplete solubilisation and hydrolysis occurs and dehydration of glucose is rapid especially at temperatures above 90°C.

We have now found that the relative amounts of the various components included in the reaction mixture for the solubilisation and hydrolysis of cellulose using calcium chloride and hydrochloric acid can have a significant effect upon the course of the reaction. In particular the water content of the reaction mixture is important.

According to the present invention we provide a process for the solubilisation and/or hydrolysis of a cellulose-containing material in which the material is contacted with hydrogen chloride, water and calcium chloride to form a reaction mixture comprising 30 to 60% water, 18 to 45% hydrogen chloride, 3 to 35% calcium chloride and 1 to 30% cellulose-containing material (all percentages being by weight based upon the total weight of the reaction mixture), the reaction mixture is maintained in a closed system under a pressure in the range 3 to 50 atmospheres absolute (about 3 to 50 bar) for a period of time in the range 2 minutes to 12 hours, a sugar-containing product is removed from the closed system and from this product hydrogen chloride and calcium containing materials are separated and recovered.

The process of the invention is suitable for the solubilisation and/or hydrolysis of any cellulose-containing material in any form. Thus the process can be applied to cellulose alone or, more usually, to cellulose admixed with other constituents either in natural products or manufactured articles. Examples of cellulose-containing materials to which the process may be applied include wood, straw, mechanical pulp, chemical pulp, newspaper, cardboard, bagasse, brewer's grain, corn stover, cotton, waste paper from paper manufacturers, other naturally occurring sources, agricultural products, waste products, by-products and manufactured products. The process is applicable to crystalline cellulose and to cellulose occurring with lignin without prior delignification. Some forms of cellulose-containing materials may require a prior treatment before being supplied to the process of the invention.

A prehydrolysis of the lignocellulosic material can be used to separate and recover the hemicellulosic or pectinaceous sugars. These include xylose, glucose, arabinose and mannose amongst others. It also has the effect of removing highly proteinaceous material from some of the lignocellulosic substrate, for example brewing grain waste and bagasse or sugar beet pulp which can be easily recovered and used as a component of the diet in animal feed. It also has the added facility of opening up the cellulosic structure for the later main hydrolysis.

The prehydrolysis that has been used in this process is dilute acid, preferably HCl, at concentrations of not greater than 2% w/w. The concentration of the lignocellulosic substrate is between 5—30% w/w. The mixture generated is heated between 100°C—180°C for 10—60 minutes dependent on the type of lignocellulosic material used. At higher temperatures unwanted by-products may accumulate and it is therefore essential to optimise the conditions of the prehydrolysis to suit the choice of substrate. Using this technique the vast majority of the hemicellulosic component of the substrate is hydrolysed to the resulting monosaccharides without directly affecting the cellulosic and lignin components which remain as suspended matter. The resulting solution is separated from the undissolved solids by filtration, at lower substrate concentrations or by compressing the solids to exclude the liquid. The solids are then subjected to full hydrolysis as described below.

The solution can be neutralised by addition of alkali. It has been found that between pH 2.0—4.5 proteins precipitate out of solution and can be collected and recovered by simple filtration or

2

centrifugation. These can be used as components in animal feed. The remaining solution can be recycled with our without addition of acid to pretreat further quantities of lignocellulosic material.

The solution from these pretreatments can then be used for fermentation, or by purification, for chemical manufacture for example, the hydrogenation of the purified xylose component to xylitol.

The sugar-containing product produced by the process may contain higher saccharides, tri-, di-saccharides and mono-saccharides. More specifically the product may contain cellodextrins, cellotriose, cellobiose and particularly glucose. The composition of the product depends upon the reaction conditions employed. Preferably the process is operated to produce a syrup containing a high proportion of glucose. Products include as would be expected, some degradation products produced by acid catalysis of glucose to hydroxymethyl furfural and other degradation products. However using the process of the invention the amounts of these degradation products are minimal except at temperatures above 120°C.

In operating the process of the invention to produce glucose it is theoretically possible to achieve 110% conversion, i.e. 1 tonne of cellulose converts to 1.1 tonnes of glucose, the added mass being due to addition of water. Suitably the process is operated to achieve conversions of at least 60% and preferably 80 to a higher level between 100% and the theoretical maximum.

Preferably the proportions in which the various components of the reaction mixture are present in that mixture as initially formed are as follows:—

    (a)   water 35% to 55%;
    (b)   hydrogen chloride 20% to 35%, especially 23% to 30%;
    (c)   calcium chloride 5% to 25%, especially 10% to 25%; and
    (d)   cellulose containing material 5% to 20%.

All percentages are by weight based upon the total weight of the reaction mixture when it is first formed. The suitable form of calcium chloride in a given situation depends upon the form in which the hydrogen chloride is added and upon the amount of water in the cellulose-containing material. Thus if concentrated aqueous hydrogen chloride is used or if the cellulose-containing material is one containing a large proportion of water, e.g. brewer's grain, anhydrous calcium chloride is preferred. Alternatively if anhydrous hydrogen chloride is used $CaCl_2 \cdot 6H_2O$ is preferred. In some circumstances it may be useful to add hydrogen chloride both as concentrated aqueous and as anhydrous hydrogen chloride. Anhydrous calcium chloride and anhydrous hydrogen chloride can be added together if the cellulose-containing material is one having a large water content.

After formation of the reaction mixture it is retained in the closed system for a period of time in the range 2 minutes to 12 hours which is the duration of the treatment of the cellulose-containing material with the hydrogen chloride/water/calcium chloride reagent mixture. During treatment the cellulose first solubilises and then hydrolyses. The duration of the treatment depends upon the temperature and upon the concentration of the cellulose-containing material in the reaction mixture. For instance the lower the concentration of the cellulose-containing material in the reaction mixture the shorter the treatment time which is required. The treatment can be carried out in one or two stages. However when very short treatment times are used, i.e. 2 to 20 minutes, it is preferred to have only one treatment stage.

The treatment, solubilisation and hydrolysis, takes place in a closed system in which an internally generated pressure is produced by calcium chloride absorbing water. Hydrogen chloride comes out of solution in the reaction mixture. The pressure on the reaction mixture depends upon the temperature and upon the free space in the system above the reaction mixture. For solubilisation the pressure is preferably in the range 3 to 10 atmospheres absolute (about 3 to 10 bar) and for hydrolysis the pressure is preferably in the range 5 to 10 atmospheres (about 5 to 10 bar).

Suitable temperatures for the process of the invention are in the range 20° to 120°C. Solubilisation can take place at lower temperatures than those required for hydrolysis. Consequently when the treatment of cellulose-containing material with the reagent mixture is begun at a temperature towards the lower end of the suitable range, i.e. 20° to 50°C, it will be advisable to raise the temperature after a while to assist hydrolysis to occur. Using temperatures in the range 50° to 120°, preferably 80° to 100°, solubilisation and hydrolysis can be achieved using the same temperature. At higher temperatures, i.e. above 120°C, solubilisation and hydrolysis can still be achieved but at such temperatures glucose which is produced is increasingly dehydrated to produce unwanted by-products, particularly furan derivatives. Consequently use of temperatures in excess of 120°C is not preferred.

The process can be performed in two stages with further water being added to the reaction mixture after solubilisation of the cellulose-containing material has occurred. This variation of the process can produce an increase of 10 to 20% in the conversion of cellulose to glucose. The additional water is introduced into the system after an appropriate time has elapsed for solubilisation to have taken place. Generally the addition may be made after from 5 to 60 minutes from the beginning of the treatment depending upon the temperature. The amount of water added to the system in such an addition is suitably in the range 5 to 25% by weight based upon the total weight of the reaction mixture when the addition is made. It should be noted that the percentages quoted hereinbefore for the components present in the reaction mixture are for the reaction mixture when it is formed initially and do not take into account any later addition of water after solubilisation.

After solubilisation and hydrolysis of the cellulose-containing material the sugar-containing product is removed from the closed system and treated to separate hydrogen chloride and calcium containing

3

materials—mainly calcium chloride—from it so that these can be re-used. The product can be passed into a large vessel thereby releasing the pressure upon it and causing hydrogen chloride to "flash" off. The hydrogen chloride thus released can be condensed and collected. Preferably the product is passed into a large vessel which is under vacuum to facilitate release of hydrogen chloride. Any hydrogen chloride remaining in solution after this treatment can be neutralised preferably with calcium hydroxide. This will produce more calcium chloride in the solution which can be separated together with that already present therein.

Any suitable method may be used for recovering calcium chloride from the sugar-containing product. A solvent extraction process may be used. When the process of the invention is used to produce a glucose-containing syrup this separation and extraction treatment will produce a glucose-containing syrup having some residual calcium chloride in it. This syrup may be subjected to further treatment if such further treatment is considered desirable. This will depend upon the quality of the extraction already performed and upon the quality of syrup which is required which will depend upon the end use of the syrup. Further treatments can be by ion exchange, dialysis, salting out or other conventional techniques. The treatment may be a combination of any of these techniques.

A recovery method which is particularly advantageous with low concentrations of calcium chloride is electrodialysis. This method relies on the ionic nature of calcium chloride and upon the non-ionic nature of glucose. Essentially when electrodialysis is used a mixture of calcium chloride and glucose in aqueous solution enters an electrodialytic cell and is subjected to an electrical current at right angles to the direction of flow. Calcium chloride ionises in the presence of this current and both the calcium ions and the chloride ions migrate across charged membranes in the cell towards the electrodes. A stream containing glucose, which is not affected by electrical charges, flows straight through the cell. The diverted streams containing calcium and chloride ions are combined together and calcium chloride is thus separated from glucose.

Hydrogen chloride and calcium chloride thus separated from the product can be re-used. The process of the invention may be performed as a batch or as a continuous process. In the case of a continuous process separated hydrogen chloride and calcium chloride may be re-cycled continuously to the reaction mixture. Lignin and any unreacted cellulose containing material may be removed from the product at or after the stage at which hydrogen chloride is recovered.

The cellulose-containing material may be subjected to a prior treatment before solubilisation and hydrolysis by the process of the invention in order to separate hemicellulose. This prior treatment may be with weak acid. Alternatively the hemicellulose component can be solubilised and hydrolysed by the process of the invention in which case the product will contain an increased amount of sugars other than glucose. Whether or not a prior treatment is used depends upon the use intended for the product.

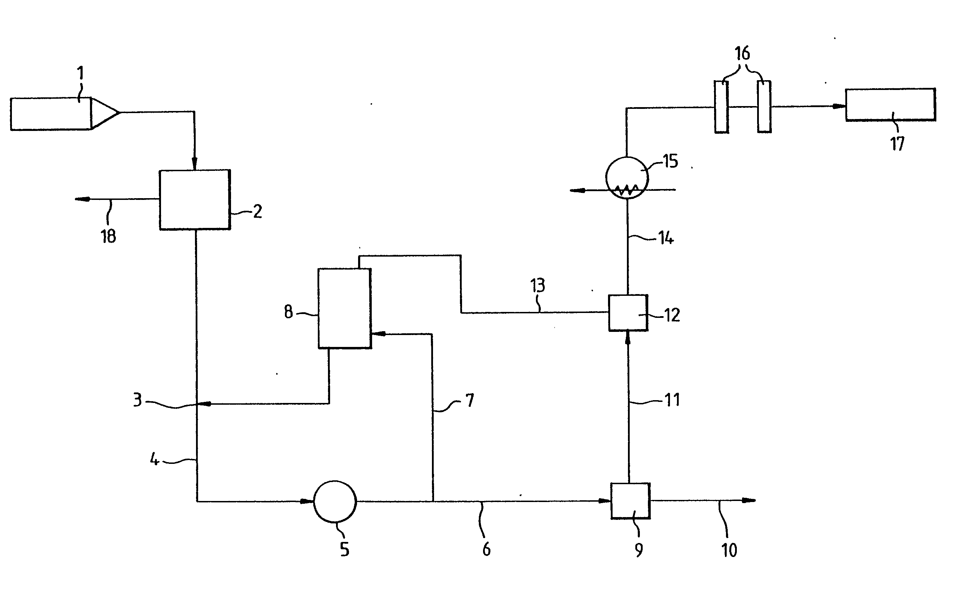

The accompanying drawing is a schematic diagram of a plant for carrying out the process of the invention. In this an aqueous cellulose-containing substrate, containing e.g. brewer's grain or waste paper pulp, passes from a supply vessel 1 to cellulosic feed preparation tank 2 in which it is mixed with hydrogen chloride, calcium chloride and water. Further water, hydrogen chloride and calcium chloride from the recycle is added at point 3 to mixed feed flowing from preparation tank 2 along pipe 4 to form a reaction mixture containing the various components in the correct proportions for the process. From point 3 the reaction mixture passes further along pipe 4 to pressurised hydrolysis vessel 5 where it is maintained at a pressure in the range 3 to 50 atmospheres absolute (about 3 to 50 bar) for a period of time within the range 2 minutes to 12 hours during which period solubilisation and hydrolysis occurs. A sugar-containing product is removed from pressurised hydrolysis vessel 5 along pipe 6 and hydrogen chloride separated from this product is passed along pipe 7 into recycled reagents preparation vessel 8. After separation of hydrogen chloride, the remainder of the sugar-containing product continues further along pipe 8 until it enters lignin and solids removal vessel 9. Waste lignin with a potential calorific value is separated from the product in vessel 9 and passes along pipe 10. The remainder of the product passes along pipe 11 to separator 12 from which calcium chloride is separated from the product to pass along pipe 13 into reagents preparation vessel 8. From separator 12 the product passes along pipe 14, through evaporator 15 and syrup purification stage 16, to enter storage vessel 17 as a purified glucose syrup. In recycled reagents preparation vessel 8, used hydrogen chloride and calcium chloride are mixed with water in appropriate proportions and the resulting mixture is fed into the mixed feed flowing along pipe 4 at point 3 to form the reaction mixture. Any material contained in the cellulose-containing substrate which is not to be allowed to pass via pipe 4 into the process is removed from cellulosic feed preparation tank 2 along waste pipe 18.

The invention is illustrated by the following Examples:—

Example 1

Three mixtures were made up. In each case anhydrous $CaCl_2$ (10 g) was dissolved in 30 mls (35.4 g) concentrated HCl (35.38 g HCl/g $H_2O$). From the resulting solutions 10 g were taken and added to 1.25 g of Whatman filter paper No. 1 in closed vessels. The mixtures contained:

**0 096 497**

| Cellulose | 1.1875 g | 10.56% w/w |
|---|---|---|
| CaCl$_2$ | 2.2026 g | 19.58% w/w |
| HCl | 2.7587 g | 24.52% w/w |
| Water | 5.1012 g | 45.34% w/w |

The mixtures were heated in the closed vessels at 70°C for 7.5 minutes. At this stage 0.81 g H$_2$O was added to one closed vessel, 1.92 g H$_2$O to another and no water addition to the third. Further heating at 90°C for 4 minutes then followed. The closed vessels were cooled and their contents analysed for glucose using the automated Beckman Glucose analyser 2. The glucose analyses were as follows:—

1. No water addition : 0.8194 g glucose.

2. 0.81 g H$_2$O addition : 0.8907 g glucose.

3. 1.92 g H$_2$O addition : 0.999 g glucose.

Example 2

Anhydrous CaCl$_2$ (30 g) was dissolved in 90 mls (106.2 g) concentrated HCl (35.38 g HCl/g H$_2$O) at room temperature. From the resulting solution 10 g were taken and added to 1.25 g newsprint and 2.5 g newsprint in separate experiments. The newsprint contained 42% w/w cellulose.

The compositions of the mixtures were as follows:—

(i) 1.25 g newsprint

| Newsprint | 1.25 g | 11.11% w/w |
|---|---|---|
| CaCl$_2$ | 2.203 g | 19.58% w/w |
| HCl | 2.7590 g | 24.52% w/w |
| Water | 5.038 g | 44.78% w/w |

(ii) 2.5 g newsprint

| Newsprint | 2.5 g | 20.0% w/w |
|---|---|---|
| CaCl$_2$ | 2.203 g | 17.62% w/w |
| HCl | 2.7590 g | 22.07% w/w |
| Water | 5.038 g | 40.3% w/w |

The mixtures were then heated in closed vessels for 8 minutes at 70°C and then cooled. Duplicates of each reaction were run. After cooling water (2 g) was added to one of each of the duplicates, the vessels were heated again at 90°C for a further 4 minutes, cooled and analysed for glucose as described in the previous example:—

(i) 1.25 g newsprint
(a) no water addition : 0.4514 g glucose

(b) 2 g water addition : 0.4919 g glucose

(ii) 2.5 g newsprint
(a) no water addition : 0.7245 g glucose

(b) 2 g water addition : 0.8358 g glucose

Example 3

Three weak acid solutions were made up by putting 2.5 ml, 5 ml, 10 ml aliquots of concentrated hydrochloric acid into 100 ml volumetric flasks and making up to volume 100 ml with deionised water. From each of these solutions 10 g was taken and added to 1.25 g dried brewing grain waste. Two samples were done at each acid concentration.

The mixtures produced contained respectively:

5

| (1) | Brewing grain waste | 1.25 g | 11.1% w/w |
|---|---|---|---|
| | concentrated HCl (35.0% HCl w/w) | 0.25 g | 2.2% w/w |
| | Water | 9.75 g | 86.7% w/w |
| (2) | Brewing grain waste | 1.25 g | 11.1% w/w |
| | concentrated HCl (35.0% HCl w/w) | 0.5 g | 4.4% w/w |
| | Water | 9.5 g | 84.4% w/w |
| (3) | Brewing grain waste | 1.25 g | 11.1% w/w |
| | concentrated HCl (35.0% HCl w/w) | 1.0 g | 8.9% w/w |
| | Water | 9.0 g | 80. % w/w |

N.B. In the above mixtures the w/w percentages quoted for HCl are percentages of the 35.0% acid.

The mixtures at each acid concentration were heated at 110° and 150°C respectively for 30 minutes and then analysed for xylose, glucose and arabinose by high pressure liquid chromatography. The analysis results for these sugars were as follows:—

| At 110°C | % xylose | % glucose | % arabinose |
|---|---|---|---|
| 2.2% Conc. HCl | 10.4 | 1.6 | 9.6 |
| 4.4% Conc. HCl | 14.4 | 4.0 | 8.8 |
| 8.9% Con. HCl | 17.6 | 5.6 | 9.6 |

| At 150°C | % xylose | % glucose | % arabinose |
|---|---|---|---|
| 2.2% Conc. HCl | 17.6 | 6.4 | 9.6 |
| 4.4% Conc. HCl | 15.2 | 7.2 | 8.8 |
| 8.9% Conc. HCl | 12.8 | 7.2 | 8.0 |

The results are expressed as the percentage conversions to sugars of the total weight of solids treated.

Example 4
Hemicellulose hydrolysis—Brewing grain waste
A weak acid solution was made by putting 2.5 mls concentrated hydrochloric acid into a 100 ml volumetric flask and making up to volume with deionised water. From this solution 10 g was taken and added to 1.25 g of brewing grain waste (dried).
The resulting mixture contained:—

| Brewing grain waste | 1.25 g | 11.1% w/w |
|---|---|---|
| Conc. HCl | 0.25 g | 2.2% w/w |
| $H_2O$ | 9.75 g | 86.7% w/w |

This mixture was heated at 140°C for 30 minutes and the surplus liquor was then decanted off. (1×) When 10 mls of this liquor had been collected it was used to hydrolyse a fresh batch of brewing grain waste under the same conditions as before, surplus liquor again being decanted off (2×).
The surplus liquor which was decanted off on each occasion, i.e. (1×) and (2×), was analysed for glucose, xylose and arabinose by high pressure liquid chromatography.
The analysis results were as follows:—

6

| | % xylose | % glucose | % carbinose |
|---|---|---|---|
| 1× | 2 | 0.7 | 1.1 |
| 2× | 3.8 | 1.3 | 2.3 |

The above figures are the total percentage of each sugar in the decanted solution.

Example 5

The method described in Example 2 was repeated using brewing grain containing 14% cellulose by weight, as determined by analysis, in place of newsprint.

The results obtained were as follows:—

(i)   1.25 g brewing grain
    (a) no water addition   :  0.156 g glucose

    (b) 2 g water addition   :  0.185 g glucose

(ii)  2.5 g brewing grain
    (a) no water addition   :  0.29 g glucose

    (b) 2 g water addition   :  0.35 g glucose

Example 6

Two mixtures were made up. In each case 10 g $CaCl_2$ was dissolved in 30 mls (35.4 g) concentrated HCl (35.38 g HCl/g $H_2O$).

From the resulting solutions 10 g was taken and added to 0.6 g. Whatman No. 1 filter paper in closed vessels.

The resulting mixtures contained:—

| Cellulose | 0.57 g | 5.1% w/w |
|---|---|---|
| $CaCl_2$ | 2.2026 g | 20.8% w/w |
| HCl | 2.7587 g | 26.03% w/w |
| $H_2O$ | 5.0712 g | 47.8% w/w |

The Whatman filter paper used contained 5% w/w moisture.

The mixtures were heated in closed vessels at 70°C for 7.5 minutes. At this stage 1.92 g $H_2O$ was added to one closed vessel, no water being added to the other.

Further heating at 90°C for 4 minutes then followed. The closed vessels were cooled and their contents were analysed for glucose using a Beckman Glucose Analyser 2.

The glucose analyses were as follows:—

| | | g glucose |
|---|---|---|
| (i)   No water addition   : | | 0.47 |
| (ii)  1.92 g water addition  : | | 0.56 |

Example 7

Hydrolysis of straw

Two mixtures were made up. In each case 10 g anhydrous $CaCl_2$ was dissolved in 30 ml (35.4 g) concentrated HCl. (35.38 g HCl/g $H_2O$). From the resulting solutions 5 g aliquots were taken and were added to 0.63 g straw in closed vessels. The straw contained 32% cellulose.

The resulting mixtures contained:—

| Straw | 0.63 g | 11.11% w/w |
|---|---|---|
| $CaCl_2$ | 1.1015 g | 19.58% w/w |
| HCl | 1.3795 g | 24.52% w/w |
| $H_2O$ | 2.519 g | 44.8% w/w |

The mixtures were heated for 7.5 minutes at 70°C and were then cooled. After cooling, water (2 g) was

7

added to one of the mixtures and both mixtures were heated again at 90°C for 4 minutes. The closed vessels containing the mixtures were cooled and their contents were analysed for glucose.

Analysis results were as follows:—

(1) No water addition    :   0.15 g glucose

(2) 2 g water addition   :   0.17 g glucose

Example 8

150 g concentrated hydrochloric acid was cooled to −10°C in a sealed container. To this was added 50 g anhydrous calcium chloride and the container was again sealed. The contents of the sealed container were mixed for 1 hour after which they were stored at −10°C overnight. The resulting clear solution (A) was used to effect solubilisation/hydrolysis in the following experiments:—

(i) 4 g of Whatman Filter Paper No. 1 were placed in a tube to which was added 36 g of solution (A) and the tube was sealed containing the mixture having the following composition:—

| | | | |
|---|---|---|---|
| Cellulose | 4 g | 9.5% | w/w |
| CaCl$_2$ | 1.83 g | 4.6% | w/w |
| HCl | 13.69 g | 34.2% | w/w |
| Water | 20.48 g | 51.71% | w/w |

The tube was heated at 60°C for 15 minutes until its contents were solubilised. It was then heated at 90°C for a further 3 minutes to complete the reaction giving a 75% conversion of cellulose to glucose.

(ii) Experiment (i) was repeated with a reduced cellulose concentration, the total weight being maintained at 40 g. The mixture had the following composition:—

| | | | |
|---|---|---|---|
| Cellulose | 3.0 g | 7.13% | w/w |
| CaCl$_2$ | 3.09 g | 7.67% | w/w |
| HCl$_2$ | 13.51 g | 33.78% | w/w |
| Water | 20.4 g | 51.0 | w/w |

The tube was heated at 60°C for 15 minutes with mixing, until its contents were solubilised. It was then heated at 90°C for a further 3 minutes to complete the reaction giving a conversion of cellulose to glucose of 82.5%.

Example 9
Comparative Example
Cellulose hydrolysis using high CaCl$_2$ and low HCl concentrations

A cellulose-containing reaction mixture was made up having the following composition:—

| | | |
|---|---|---|
| Cellulose | : | 12.2% w/w |
| CaCl$_2$ | : | 43.9% w/w |
| HCl | : | 8.8% w/w |
| Water | : | 35.1% w/w |

The CaCl$_2$ was added as a mixture of CaCl$_2$ · 6H$_2$O and anhydrous CaCl$_2$ but the percentage quoted above is for anhydrous CaCl$_2$. Using the conditions of Examples 1 and 2 the reaction was carried out for 2 hours at 60°C. After this time the product mixture was evaluated and found to have the following composition:—

8

**0 096 497**

| Product component | % w/w of total product composition |
|---|---|
| Glucose | 60.6 |
| Disaccharides | 15.5 |
| Trisaccharides and higher oligomers | 2.55 |
| Other saccharides (unidentified) | 4.3 |
| Hydroxymethylfurfural | 0.55 |
| Humins, as block residue | 14.6 |
| Ether soluble products | 1.9 |

Thus using these conditions (high $CaCl_2$ and low HCl concentrations) a relatively large concentration of by-products is produced. For instance humins and hydroxymethylfurfural together total 15.15% w/w of the product.

**Claims**

1. A process for the solubilisation and/or hydrolysis of a cellulose-containing material in which the material is contacted with hydrogen chloride, water and calcium chloride to form a reaction mixture comprising 30 to 60% water, 18 to 45% hydrogen chloride, 3 to 35% calcium chloride and 1 to 30% cellulose-containing material (all percentages being by weight based upon the total weight of the reaction mixture), the reaction mixture is maintained in a closed system under a pressure in the range 3 to 50 atmospheres (about 3 to 50 bars) absolute for a period of time in the range 2 minutes to 12 hours, a sugar-containing product is removed from the closed system and from this product hydrogen chloride and calcium containing materials are separated and recovered.

2. A process according to claim 1 wherein a sugar-containing product comprising glucose is removed.

3. A process according to claim 1 or claim 2 wherein the reaction mixture comprises 35% to 55% water.

4. A process according to any one of the preceding claims wherein the reaction mixture comprises 20% to 35% of hydrogen chloride.

5. A process according to any one of the preceding claims wherein the reaction mixture comprises 5% to 25% calcium chloride.

6. A process according to any one of the preceding claims wherein the reaction mixture comprises 5% to 20% cellulose-containing material.

7. A process according to any one of the preceding claims wherein before the formation of the reaction mixture the cellulose-containing material is treated with an acid at a concentration not greater than 2% w/w for a period within the range 10 to 60 minutes and at a temperature within the range 20° to 120°C.

8. A process according to any one of the preceding claims wherein an additional amount of water within the range 5% to 25% by weight based upon the total weight of the reaction mixture when the addition is made is added to the reaction mixture after solubilisation of the cellulose-containing material has occurred.

9. A process according to any one of the preceding claims wherein the reaction mixture is maintained in the closed system at a temperature within the range 20° to 120°C.

10. A process according to any one of the preceding claims wherein hydrogen chloride and calcium containing materials are separated from the sugar-containing product by electrodialysis.

**Patentansprüche**

1. Verfahren zum Löslichmachen und/oder Hydrolysieren eines cellulosehaltigen Materials, bei dem das Material mit Chlorwasserstoff, Wasser und Calciumchlorid in Berührung gebracht wird, um eine Reaktionsmischung zu bilden, die 30 bis 60 % Wasser, 18 bis 45 % Chlorwasserstoff, 3 bis 35 % Calciumchlorid und 1 bis 30 % cellulosehaltiges Material enthält (wobei alle Prozentgehalte Masse % sind, die sich auf die Gesamtmasse der Reaktionsmischung beziehen), die Reaktionsmischung für eine Dauer in dem Bereich von 2 Minuten bis 12 Stunden in einem geschlossenen System unter einem Druck in dem Bereich von 3 bis 50 Atmosphären (etwa 3 bis 50 bar) absolut gehalten wird, aus dem geschlossenen System ein zuckerhaltiges Produkt entfernt wird und von diesem Produkt Chlorwasserstoff und calciumhaltige Materialien abgetrennt und zurückgewonnen werden.

2. Verfahren nach Anspruch 1, bei dem ein zuckerhaltiges Produkt, das Glucose enthält, entfernt wird.

3. Verfahren nach Anspruch 1 oder Anspruch 2, bei dem die Reaktionsmischung 35 % bis 55 % Wasser enthält.

9

4. Verfahren nach einem der vorhergehenden Ansprüche, bei dem die Reaktionsmischung 20 % bis 35 % Chlorwasserstoff enthält.

5. Verfahren nach einem der vorhergehenden Ansprüche, bei dem die Reaktionsmischung 5 % bis 25 % Calciumchlorid enthält.

6. Verfahren nach einem der vorhergehenden Ansprüche, bei dem die Reaktionsmischung 5 % bis 20 % cellulosehaltiges Material enthält.

7. Verfahren nach einem der vorhergehenden Ansprüche, bei dem vor der Bildung der Reaktionsmischung das cellulosehaltige Material für eine Dauer in dem Bereich von 10 bis 60 Minuten und bei einer Temperatur in dem Bereich von 20° bis 120°C mit einer Säure mit einer Konzentration von nicht mehr als 2 % (Masse/Masse) behandelt wird.

8. Verfahren nach einem der vorhergehenden Ansprüche, bei dem zu der Reaktionsmischung eine zusätzliche Wassermenge in dem Bereich von 5 Masse% bis 25 Masse%, bezogen auf die Gesamtmasse der Reaktionsmischung, wenn die Zugabe durchgeführt wird, zugegeben wird, nachdem das Löslichmachen des cellulosehaltigen Materials eingetreten ist.

9. Verfahren nach einem der vorhergehenden Ansprüche, bei dem die Reaktionsmischung bei einer Temperatur in dem Bereich von 20° bis 120°C in dem geschlossenen System gehalten wird.

10. Verfahren nach einem der vorhergehenden Ansprüche, bei dem Chlorwasserstoff und calciumhaltige Materialien durch Elektrodialyse von dem zuckerhaltigen Produkt abgetrennt werden.

**Revendications**

1. Procédé pour la solubilisation et/ou l'hydrolyse d'une matière contenant de la cellulose, selon lequel la matière est mise en contact evec de l'acide chlorhydrique, de l'eau et du chlorure de calcium pour former un mélange réactionnel comprenant 30 à 60 % d'eau, 18 à 45 % d'acide chlorhydrique, 3 à 35 % de chlorure de calcium et 1 à 30 % de matière contenant de la cellulose (tous les pourcentages étant en poids par rapport au poids total du mélange réactionnel), le mélange réactionnel est maintenu dans un système fermé sous une pression dans la gamme de 3 à 50 atmosphères (environ 3 à 50 bars) abs. pendant une période de temps comprise dans la gamme de 2 minutes à 12 heures, un produit contenant du sucre est éliminé du système fermé et des matières contenant du calcium et de l'acide chlorhydrique sont séparés et récupérés à partir de ce produit.

2. Procédé suivant la revendication 1, dans lequel on enlève un produit contenant un sucre comprenant du glucose.

3. Procédé suivant la revendication 1 ou la revendication 2, dans lequel le mélange réactionnel comprend 35 % à 55 % d'eau.

4. Procédé suivant l'une quelconque des revendications précédentes, dans lequel le mélange réactionnel comprend 20 % à 35 % d'acide chlorhydrique.

5. Procédé suivant l'une quelconque des revendications précédentes, dans lequel le mélange réactionnel comprend 5 à 25 % de chlorure de calcium.

6. Procédé suivant l'une quelconque des revendications précédentes, dans lequel le mélange réactionnel comprend 5 % à 20 % de matière contenant de la cellulose.

7. Procédé suivant l'une quelconque des revendications précédentes, dans lequel, avant la formation du mélange réactionnel, la matière contenant la cellulose est traitée avec un acide à une concentration ne dépassant pas 2 % en p/p pendant une période dans la gamme de 10 à 60 minutes et à une température dans la gamme de 20° à 120°C.

8. Procédé suivant l'une quelconque des revendications précédentes, dans lequel une quantité d'eau supplémentaire dans la gamme de 5 % à 25 % en poids par rapport au poids total du mélange réactionnel après addition, est ajoutée au mélange réactionnel après réalisation de la solubilisation de la matière contenant de la cellulose.

9. Procédé suivant l'une quelconque des revendications précédentes, dans lequel le mélange réactionnel est maintenu dans le système fermé à une température dans la gamme de 20° à 120°C.

10. Procédé suivant l'une quelconque des revendications précédentes, dans lequel des matières contenant du calcium et de l'acide chlorhydrique sont séparées par électrodialyse du produit contenant du sucre.

0 096 497